# EUROPEAN PATENT APPLICATION

(11) **EP 4 640 589 A1**
(43) Date of publication of application: **29.10.2025**
(21) Application number: 24760187.5
(22) Date of filing: 13.02.2024
(51) Int. Cl.: B65G 1/00, B65G 1/137, B65G 47/52

(54) **ARTICLE TRANSPORT FACILITY**

(30) Priority: 21.02.2023 JP 2023025250
(71) Applicant: Daifuku Co., Ltd., Osaka-shi, Osaka 555-0012 (JP)
(72) Inventor: MISHINA, Yasuhisa, Gamo-gun, Shiga 529-1692 (JP); YOSHINAGA, Kazuharu, Gamo-gun, Shiga 529-1692 (JP); OGAWA, Tadasuke, Tokyo 105-0022 (JP); FUJITA, Kouji, Tokyo 105-0022 (JP); MIYAMOTO, Masaya, Tokyo 105-0022 (JP); TAKAGI, Daiki, Gamo-gun, Shiga 529-1692 (JP)
(74) Representative: Grosse, Felix Christopher
(86) International application number: PCT/JP2024/004711
(87) International publication number: WO 2024/176885

(57) **Abstract**

An article transport facility (100) includes a work area placed adjacent to a transport path (Fr) from a first side (Y1) in a path width direction and adjacent to an article supply unit (Pg) from a first side (X1) in a path direction so that articles (G) supplied from the article supply unit (Pg) are transferred to a transport vehicle (V). A temporary placing stand (1) on which the articles (G) supplied from the article supply unit (Pg) are temporarily placed is provided for a region adjacent to the work area (WA) from a second side (X2) in the path direction and sandwiched between the transport path (Fr) and the article supply unit (Pg) in the path width direction (Y).

## Description

### Technical Field

The present invention relates to an article transport facility including a transport vehicle configured to travel along a predetermined travel path and transport articles, and an article supply unit configured to supply the articles to be transported by the transport vehicle.

### Background Art

In an article transport facility such as a distribution warehouse, a plurality of processes such as supply, transport, and sorting of articles is performed, and a plurality of transport devices is used between these processes. Japanese Unexamined Patent Application Publication No. 04-350019 (Patent Literature 1) discloses an example of such an article transport facility. Hereinafter, reference signs described within parentheses in the description of the Background Art are reference signs used in Patent Literature 1.

In the facility described in Patent Literature 1, an article (W) transported to a retrieval station (9) by a stacker crane (4) is supplied to an area where an operator (M) is present. The operator (M) transfers the supplied article (W) to a conveyer (11) in accordance with an order form or the like. The article (W) is transported by the conveyer (11) to a place where a following step is performed.

### Citation List

### Patent Literature

Patent Literature 1: Japanese Unexamined Patent Application Publication No. 04-350019

### Summary of Invention

### Technical Problem

In the meantime, in the facility described in Patent Literature 1, the article (W) supplied from the stacker crane (4) and the retrieval station (9) is transferred to the conveyer (11) and transported. However, it is conceivable that an unmanned transport vehicle configured to travel independently is used instead of the conveyer (11). In this case, each transport vehicle can transport the article at an original timing and along an original route, thereby making it possible to increase the degree of freedom of transport in the whole facility.

However, this may cause the following problems. That is, no transport vehicle may stand by at a destination to which the article is to be transferred, depending on the operating status of transport vehicles. In this case, the supplied article cannot be transferred to the transport vehicle. As a result, the operator cannot perform any operation on a subsequent article, and the supply of articles at a previous stage also delays.

In view of such actual circumstances, it is desired to attain a technology that can restrain delays in the supply of articles from an article supply unit.

### Solution to Problem

An article transport facility according to this disclosure is an article transport facility including: a transport vehicle configured to travel along a predetermined travel path and transport articles; an article supply unit configured to supply the articles to be transported by the transport vehicle; a transport path on which the transport vehicle travels to transport the articles in a path direction along the transport path; a work area adjacent to the transport path from a first side in a path width direction perpendicular to the path direction as viewed vertically and adjacent to the article supply unit from a first side in the path direction, the work area being an area in which the articles supplied from the article supply unit are transferred to the transport vehicle; and a temporary placing stand provided for a region adjacent to the work area from a second side in the path direction and sandwiched between the transport path and the article supply unit in the path width direction so that the articles supplied from the article supply unit are temporarily placed on the temporary placing stand, the second side in the path direction being opposite from the first side in the path direction.

With this configuration, in the work area, the articles supplied from the article supply unit can be transferred to the transport vehicle standing by on the transport path. In a case where no transport vehicle stands by on the transport path, the articles supplied from the article supply unit can be placed on the temporary placing stand. Accordingly, it is possible to prevent delays in the supply of the articles without stopping the operation of the article supply unit.

In addition, in this configuration, since the article supply unit, the temporary placing stand, and the transport path are arranged in the path width direction, it is possible to smoothly move the articles from the article supply unit to the temporary placing stand and smoothly move the articles from the temporary placing stand to the transport vehicle on the transport path.

Further features and advantages of the technology according to this disclosure will become clearer by the following illustrative and nonlimiting description of embodiments to be described with reference to the drawings.

### Brief Description of Drawings

Fig. 1 is a plan view illustrating a first traveling floor and a second traveling floor in an article transport facility;
Fig. 2 is a sectional view taken along a line II-II in Fig. 1;
Fig. 3 is a plan view illustrating an essential part of the article transport facility;
Fig. 4 is an explanatory drawing illustrating an operation in a work area;
Fig. 5 is a plan view illustrating a first traveling floor of an article transport facility according to a second embodiment;
Fig. 6 is a side view of an empty container storage unit;
Fig. 7 is a perspective view of the empty container storage unit; and
Fig. 8 is a view illustrating an operation performed by an operator in the empty container storage unit.

### Description of Embodiments

An article transport facility includes a transport vehicle configured to travel along a predetermined travel path and transport an article, and an article supply unit configured to supply the article to be transported by the transport vehicle. The following describes embodiments of the article transport facility with reference to an article transport facility including a plurality of traveling floors.

### [First Embodiment]

First described is a first embodiment of the article transport facility.

### [Outline of Article Transport Facility]

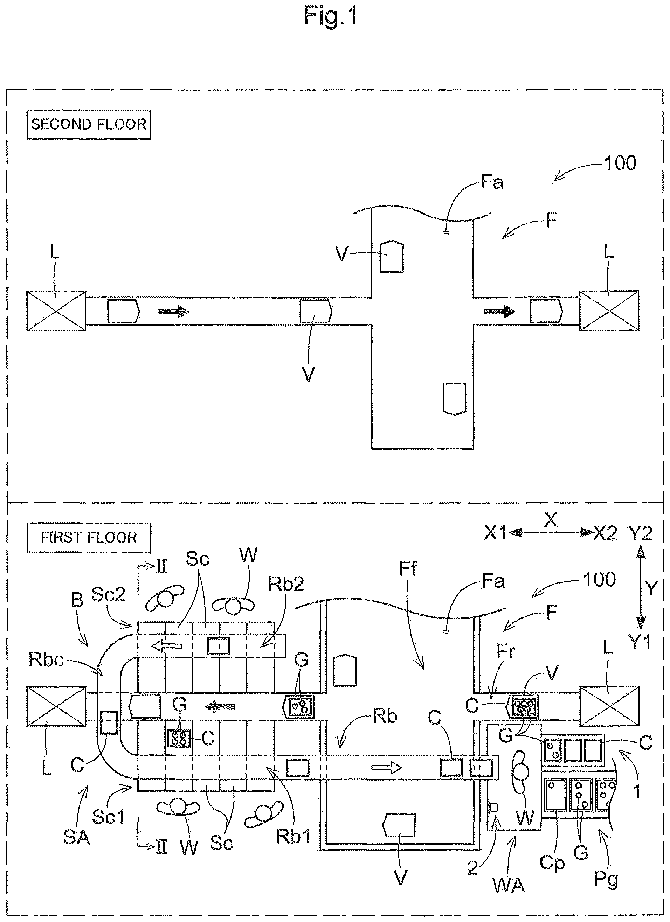

First described is an outline of an article transport facility with reference to Fig. 1. As illustrated in Fig. 1, an article transport facility 100 includes a plurality of traveling floors F arranged in the up-down direction, and transport vehicles V configured to travel on travel surfaces Fa of the plurality of traveling floor F. A plurality of transport vehicle V travels on the travel surface Fa of each of the traveling floors F.

In the example illustrated in Fig. 1, the article transport facility 100 includes two traveling floors F. Fig. 1 illustrates a first traveling floor F and a second traveling floor F. However, the present invention is not limited to such a configuration, and the article transport facility 100 may include three or more traveling floors F.

The article transport facility 100 includes a transport path Fr on which the transport vehicle V travels to transport articles G. The transport path Fr is configured as part of the traveling floor F. In the present embodiment, each of the traveling floors F includes the transport path Fr and a traveling field Ff. The transport path Fr is one path provided over a work area WA and a sorting area SA (described later). In a case where the transport vehicle V transports the articles G from the work area WA to the sorting area SA, the transport vehicle V travels on the transport path Fr. The traveling field Ff is an area expanding in a flat shape on the traveling floor F. The transport vehicle V can freely travel in the traveling field Ff. In the present embodiment, the transport path Fr and the traveling field Ff partially overlap with each other. More specifically, the traveling field Ff is provided between the work area WA and the sorting area SA, and the transport path Fr is provided to cross the traveling field Ff between the work area WA and the sorting area SA.

Hereinafter, directions are defined based on the transport path Fr. More specifically, a "path direction X" indicates a direction along the transport path Fr, and a "path width direction Y" indicates a direction perpendicular to the path direction X as viewed vertically. A "path-direction first side X1" indicates one side in the path direction X, and a "path-direction second side X2" indicates the other side in the path direction X. A "path-width-direction first side Y1" indicates one side in the path width direction Y, and a "path-width-direction second side Y2" indicates the other side in the path width direction Y.

The transport vehicle V is configured to travel straight and to turn around a vertical axis on the spot to change direction. The transport vehicle V travels straight and turns around, so that the transport vehicle V can freely travel in the traveling field Ff on each of the first traveling floor F and the second traveling floor F.

The article transport facility 100 includes a pair of lifters L configured to lift and lower the transport vehicle V between a plurality of (in the present example, two) traveling floors F, an article supply unit Pg configured to supply the articles G, the work area WA, in which the articles G supplied from the article supply unit Pg are transferred to the transport vehicle V, the sorting area SA, in which articles G are sorted, and an empty container collector B configured to collect an empty container C caused by the sorting performed in the sorting area SA.

In the present embodiment, the work area WA and the sorting area SA are provided at the same level as the first traveling floor F. The work area WA and the sorting area SA are not provided for the second traveling floor F.

The work area WA is located adjacent to the transport path Fr and the article supply unit Pg. In the present embodiment, the article supply unit Pg supplies the articles G to the work area WA with the articles G being stored in a supply container Cp. In the work area WA, the articles G stored in the supply container Cp are taken out and transferred to the transport vehicle V standing by on the transport path Fr. The articles G may be transferred to the transport vehicle V with the articles G being stored in a container C different from the supply container Cp or may be transferred to the transport vehicle V with the articles G being not stored in the container C. In the present embodiment, the above operation in the work area WA is performed by the operator W.

However, the operation may be performed by a robot instead of the operator W, or the operation may be performed by the operator W and the robot.

The transport vehicle V is configured to transport the articles G or the container C storing the articles G.

In the present embodiment, the transport vehicle V receives the articles G or the container C storing the articles G in the work area WA and transports the articles G or the container C storing the articles G to the sorting area SA.

The sorting area SA is located adjacent to the transport path Fr in the path width direction Y at a place apart from the work area WA. In the sorting area SA, the articles G transported by the transport vehicle V are sorted. The sorting is performed based on predetermined order information. For example, the order information includes various types of information such as customer information, shipment destination information, and article category information, for example.

In the present embodiment, in a case where the transport vehicle V transports the articles G stored in the container C to the sorting area SA, the articles G are taken out of the container C transported by the transport vehicle V in the sorting area SA. That is, the sorting includes taking out the articles G from the container C transported by the transport vehicle V. Due to the taking-out, the container C is separated from the articles G, so that the empty container C is caused. In a case where the transport vehicle V transports the articles G (the articles G not stored in the container C) to the sorting area SA, the articles G transported by the transport vehicle V are received in the sorting area SA. The articles G thus taken out of the container C or the articles G thus received are stored in a container (not illustrated) corresponding to a shipment destination, for example.

The empty container collector B is configured to collect the empty container C caused by the taking-out. A collection path Rb on which the empty container C is transported by the empty container collector B extends to a position adjacent to the work area WA. In the present example, the collection path Rb extends to inside the work area WA. The empty container C collected by the empty container collector B is transported along the collection path Rb to the work area WA and is used for the operation in the work area WA. The empty container collector B is constituted by a conveyor, for example. The empty container collector B constituted by a conveyor extends along the collection path Rb. In the present embodiment, the operator W performs the sorting (including the taking-out) in the sorting area SA. Note that the sorting may be performed by a robot instead of the operator W, or the sorting may be performed by the operator W and the robot.

After the articles G are transferred to the sorting area SA, the transport vehicle V rides on the lifter L and travels toward another traveling floor F (in the present example, the second traveling floor F). Then, the transport vehicle V travels on the second traveling floor F, rides on the other lifter L, and returns to the traveling floor F (in the present example, the first traveling floor F) provided with the work area WA and the sorting area SA. The transport vehicle V returning to the first traveling floor F receives articles G in the work area WA and transports the articles G to the sorting area SA.

### [Detailed Configuration of Sorting Area]

As described above, the sorting area SA is an area in which the articles G are sorted and is located adjacent to the transport path Fr in the path width direction Y.

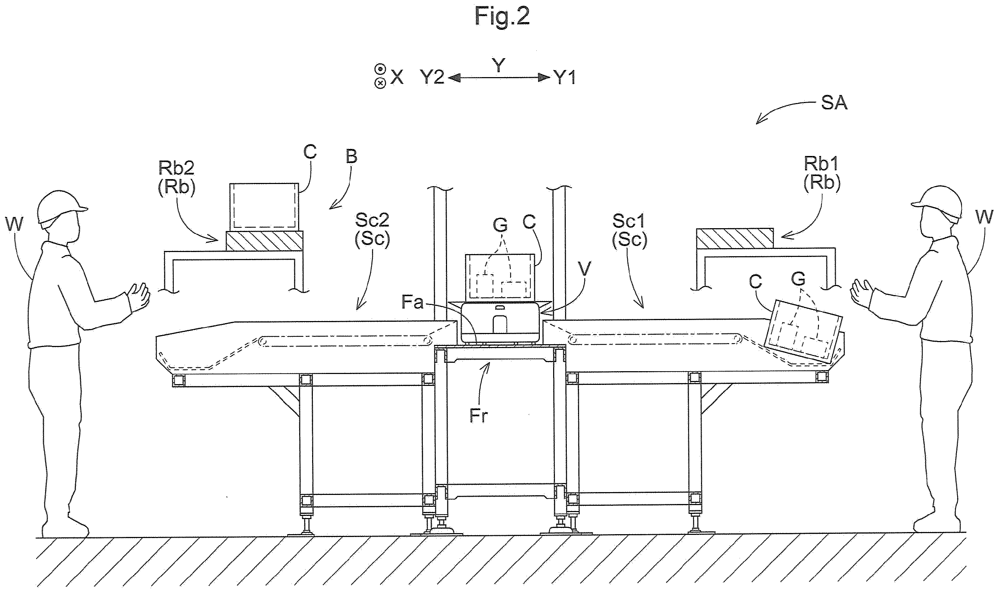

As illustrated in Figs. 1, 2, in the present embodiment, the sorting area SA includes a plurality of sorting conveyors Sc configured to transport the articles G or the container C received from the transport vehicle V. Each of the plurality of sorting conveyors Sc transports the articles G or the container C received from the transport vehicle V to a work site of the operator W (or the robot) working in the sorting area SA. Hereby, a plurality of work sites in the sorting area SA can be placed separately to correspond to the number of sorting conveyors Sc. This allows the sorting to be easily performed on each of the work sites, which contributes to improvement in working efficiency.

In the present embodiment, the plurality of sorting conveyors Sc is arranged along the path direction X, and each of the sorting conveyors Sc is placed to transport the articles G or the container C along the path width direction Y. In this configuration, as many sorting conveyors Sc as possible can be placed in a region in the path direction X along the transport path Fr in the sorting area SA. This makes it possible to improve the performance of the working operation as the whole sorting area SA. Each of the sorting conveyors Sc is configured to transport the articles G or the container C along the path width direction Y. Accordingly, in comparison with a case where the transport direction of each of the sorting conveyors Sc is along the path direction X or a case where the transport direction of each of the sorting conveyors Sc is inclined from the path direction X (to have a component in the path direction X), it is possible to prevent the sorting area SA from expanding in the path direction X.

In the present embodiment, the plurality of sorting conveyors Sc is located to sandwich the transport path Fr in the sorting area SA from both sides. Hereby, the sorting can be performed on both sides across the transport path Fr, thereby making it possible to improve the performance of the sorting as the whole sorting area SA. In the following description, the plurality of sorting conveyors Sc includes a first sorting conveyor group Sc1 including a plurality of sorting conveyors Sc located on the path-width-direction first side Y1 relative to the transport path Fr, and a second sorting conveyor group Sc2 including a plurality of sorting conveyors Sc located on the path-width-direction second side Y2 relative to the transport path Fr.

As described above, the empty container collector B is configured to collect the empty container C caused by the taking-out performed as part of the sorting. The taking-out is an operation for taking out the articles G from the container C transported by the transport vehicle V. The empty container C is transported along a collection path Rb to the work area WA.

In the present embodiment, the collection path Rb extends along a direction intersecting with the transport direction of the articles G or the container C transported by the sorting conveyor Sc and overlaps with the sorting conveyor Sc as viewed vertically. In the present example, the collection path Rb extends in a direction perpendicular to each of the sorting conveyors Sc extending in the path width direction Y as viewed vertically, that is, the collection path Rb extends in the path direction X.

In the example illustrated in Fig. 2, the collection path Rb is located at a height different from the transport path Fr.

More specifically, the collection path Rb is located at a position higher than the transport path Fr. In a case where the operation in the sorting area SA is performed by the operator W, it is preferable that the height at which the collection path Rb is located be a height around the chest of the operator W having an average height. This allow the operator W to easily place the empty container C on the collection path Rb. Note that a position adjusting mechanism configured to adjust the position of the collection path Rb relative to the operator W may be provided.

In the present embodiment, the collection path Rb includes a first section Rb1 extending along the path direction X and overlapping with the first sorting conveyor group Sc1 as viewed vertically, a second section Rb2 extending along the path direction X and overlapping with the second sorting conveyor group Sc2 as viewed vertically, and a connection section Rbc (see Fig. 1) connecting respective end portions of the first section Rb1 and the second section Rb2 which end portions are farthest from the work area WA. In other words, the collection path Rb is constituted by one path overlapping with the first sorting conveyor group Sc1 and the second sorting conveyor group Sc2 as viewed vertically. This configuration allows one collection path Rb to collect and transport, to the work area WA, the empty container C caused by the sorting in each of the first sorting conveyor group Sc1 and the second sorting conveyor group Sc2 separated from each other to sandwich the transport path Fr therebetween. In the present embodiment, a portion of one (herein, the first section Rb1) of the first section Rb1 and the second section Rb2 which portion is opposite from a side where the one of the first section Rb1 and the second section Rb2 are connected to the connection section Rbc extends to a position adjacent to the work area WA (in the present example, the portion extends to enter the work area WA). In the present embodiment, the connection section Rbc overlaps with the transport path Fr as viewed vertically.

As illustrated in Fig. 1, in the present embodiment, a connecting portion between the first section Rb1 and the connection section Rbc and a connecting portion between the second section Rb2 and the connection section Rbc are formed in an arc shape as viewed vertically. This makes it possible to transport the container C at a constant traveling speed between those different sections in the collection path Rb, thereby making it possible to smoothly transport the container C.

### [Detailed Configuration of Work Area]

As described above, the work area WA is an area in which the articles G supplied from the article supply unit Pg are transferred to the transport vehicle V and is located adjacent to the transport path Fr and the article supply unit Pg. A detailed description thereof is given below.

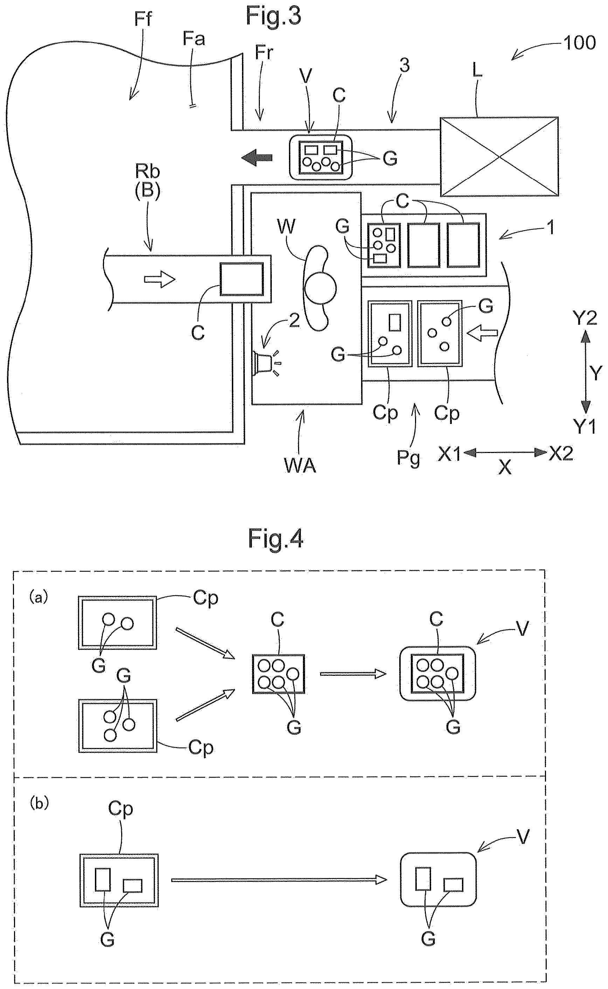

As illustrated in Fig. 3, the work area WA is located adjacent to the transport path Fr from the path-width-direction first side Y1 and adjacent to the article supply unit Pg from the path-direction first side X1. Hereby, in the work area WA, the articles G are received from the path-direction first side X1 of the article supply unit Pg, and the articles G are transferred to the transport vehicle V standing by on the transport path Fr from the path-width-direction first side Y1.

In the present embodiment, the work area WA is located adjacent to an exit for the transport vehicle V from the lifter L. Hereby, the articles G can be transferred to the transport vehicle V just leaving the lifter L, thereby making it possible to avoid a state where the transport vehicle V traveling in the facility does not transport any article G.

In the present embodiment, a standby space 3 where at least one or more transport vehicles V can stand by is provided for the transport path Fr between the lifter L and the work area WA. Hereby, in a case where the operation in the work area WA delays, at least one or more transport vehicles V can stand by to receive the articles G just after the at least one or more transport vehicles V leave the lifter L.

A temporary placing stand 1 on which the articles G supplied from the article supply unit Pg are temporarily placed is provided for a region adjacent to the work area WA from the path -direction second side X2 and sandwiched between the transport path Fr and the article supply unit Pg in the path width direction Y. In the present embodiment, the temporary placing stand 1 is provided for a region sandwiched between the standby space 3 and the article supply unit Pg in the path width direction Y. No transport vehicle V may stand by in a portion of the transport path Fr to which portion the article G is to be transferred, depending on the operating status of transport vehicles V. In such a case, with the above configuration, it is possible to place the article G supplied from the article supply unit Pg on the temporary placing stand 1. Since the article G is placed on the temporary placing stand 1, the article supply unit Pg can supply a next article G. Accordingly, it is possible to prevent delays in the supply of the articles G without stopping the operation of the article supply unit Pg.

In the present embodiment, the container C that can store the article G is placed on the temporary placing stand 1. This makes it possible to store a plurality of articles G sequentially supplied from the article supply unit Pg in the container C. Then, at the timing when the articles G can be transferred to the transport vehicle V, the articles G stored in the container C can be transferred to the transport vehicle V together with the container C, or each of the articles G can be taken out from the container C and transferred to the transport vehicle V. That is, as illustrated in (a) of Fig. 4, with the use of the container C for the operation in the work area WA, a plurality of articles G stored in corresponding supply containers Cp and sequentially supplied can be stored in the container C on the temporary placing stand 1, and the plurality of articles G thus stored in the container C can be transferred to the transport vehicle V together with the container C.

Another advantage of the use of the container C is that the transport vehicle V can stably transport an article G that is easy to roll, for example. In a case where the article G that is easy to roll is supplied from the article supply unit Pg, even when the article G is just one article G, the article G should be contained in the container C on the temporary placing stand 1 and transferred to the transport vehicle V. This makes it possible to avoid the article G being transported by the transport vehicle V from falling from the transport vehicle V. Note that an article G that is hard to roll may be directly transferred to the transport vehicle V without being stored in the container C as illustrated in (b) of Fig. 4. However, in a case where no transport vehicle V stands by, even such an article G that is hard to roll should be stored in the container C until the article G can be transferred to the transport vehicle V.

Although details are not illustrated in Fig. 3, in the present embodiment, the temporary placing stand 1 is located at a position lower than an article supply position, at which the article G is supplied from the article supply unit Pg. This makes it possible to easily store the article G supplied from the article supply unit Pg in the container C on the temporary placing stand 1. Besides, the temporary placing stand 1 is located at a position higher than the transport path Fr. This makes it possible to easily transfer the container C on the temporary placing stand 1 to the transport vehicle V on the transport path Fr. That is, the article G can be moved from the article supply unit Pg to the temporary placing stand 1 and can be moved from the temporary placing stand 1 to the transport vehicle V by the operation in the work area WA. In the above configuration, the article supply position in the article supply unit Pg, the position of the temporary placing stand 1, and the position of the transport vehicle V in the transport path Fr are arranged in this order from the top. Hereby, the article G is just moved from top to bottom in the operation in the work area WA, thereby making it possible to reduce a workload.

In the present embodiment, a notifier 2 is provided for the work area WA. The notifier 2 is configured to notify that the empty container C transported on the collection path Rb has arrived at the work area WA. The notifier 2 visually or audibly notifies the operator W of the arrival of the empty container C, for example. In the present embodiment, the notifier 2 is constituted by a lamp, for example, and visually notifies the operator W of the arrival of the empty container C. The notifier 2 may be constituted by a display device such as a monitor instead of the lamp or together with the lamp and may be configured to notify the operator W of the arrival of the empty container C thereby. Note that the notifier 2 may be constituted by a buzzer, for example, and may audibly notify the operator W of the arrival of the empty container C. Alternatively, the notifier 2 may be constituted by a lamp and a buzzer and may visually and audibly notify the operator W of the arrival of the empty container C.

### [Second Embodiment]

Next will be described a second embodiment of the article transport facility. The second embodiment is different from the first embodiment in the configuration of the sorting area SA. The following description about the second embodiment mainly deals with differences from the first embodiment. Points not described particularly are the same as those in the first embodiment.

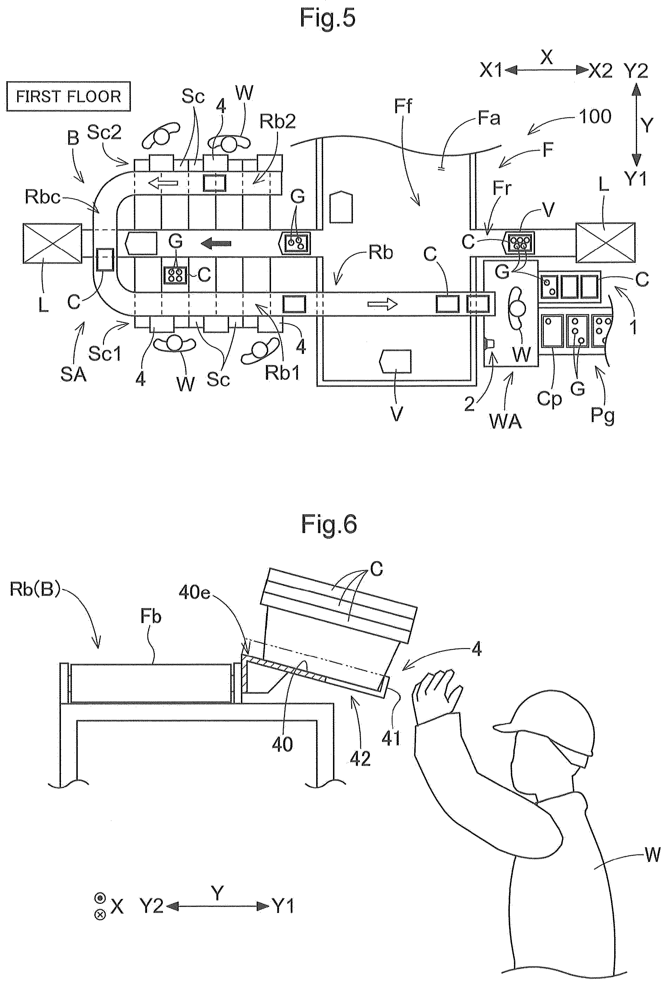

As illustrated in Figs. 5, 6, in the present embodiment, an empty container storage unit 4 configured to store one or more empty containers C be put onto the collection path Rb is located adjacent to the collection path Rb. The empty container storage unit 4 is configured to store the empty container C caused by the taking-out (an operation for taking out the articles G from the container C transported by the transport vehicle V) in the sorting area SA. The empty container C is put onto the collection path Rb of the empty container collector B and transported to the work area WA, and the empty container storage unit 4 can store the empty container C before the empty container C is put onto the collection path Rb.

As illustrated in Fig. 5, in the present embodiment, a plurality of empty container storage units 4 is provided. The plurality of empty container storage units 4 is placed at intervals along an extending direction (in the present example, the path direction X) of the collection path Rb. In the present example, the number of empty container storage units 4 is smaller than the number of sorting conveyors Sc. In other words, each of the empty container storage units 4 is used in common by a plurality of sorting conveyors Sc. Hereby, in a case where a plurality of empty containers C is caused by the taking-out performed in a plurality of sorting conveyor Sc using the empty container storage unit 4 in common, the plurality of empty containers C can be collectively stored in one empty container storage unit 4.

As illustrated in Fig. 6, the empty container storage unit 4 has a container supporting surface 40 configured to support the empty container C from below. In the present embodiment, the empty container storage unit 4 is made of a plate material, and part of the plate material is formed as the container supporting surface 40.

In the present embodiment, the container supporting surface 40 is inclined downward as the container supporting surface 40 is distanced from the collection path Rb. In the present example, the container supporting surface 40 is inclined such that an end portion close to the collection path Rb in the path width direction Y is higher than an end portion opposite to the collection path Rb in the path width direction Y. This allows the operator W outward of the empty container storage unit 4 (in the present example, on the path-width-direction first side Y1) in the path width direction Y to easily place the empty container C onto the container supporting surface 40.

The empty container storage unit 4 includes a stopper wall 41 standing upward from an outer edge of the container supporting surface 40. The stopper wall 41 has a function to restrict downward movement of the empty container C supported by the container supporting surface 40. This makes it possible to prevent the empty container C supported by the container supporting surface 40 from falling from the empty container storage unit 4. In the configuration in which the container supporting surface 40 is inclined like the present embodiment, it is preferable that the stopper wall 41 be provided. In the meantime, in a case where the container supporting surface 40 is placed horizontally, for example, the stopper wall 41 may not be provided.

Here, the collection path Rb has a transport surface Fb supporting, from below, the empty container C to be transported. Similarly to the first embodiment, the empty container collector B is constituted by a conveyor, and the top surface of the conveyor is the transport surface Fb.

In the present embodiment, the container supporting surface 40 includes an adjacent portion 40e as a portion adjacent to the transport surface Fb, and the adjacent portion 40e is higher than the transport surface Fb in height. Hereby, in a case where the empty container C is put onto the collection path Rb, it is not necessary to lift the empty container C. That is, the empty container C can be put onto the collection path Rb just by pushing the empty container C toward the collection path Rb. Note that, in the example illustrated herein, the height of the adjacent portion 40e of the container supporting surface 40 is higher than the transport surface Fb, but they may be placed at the same height.

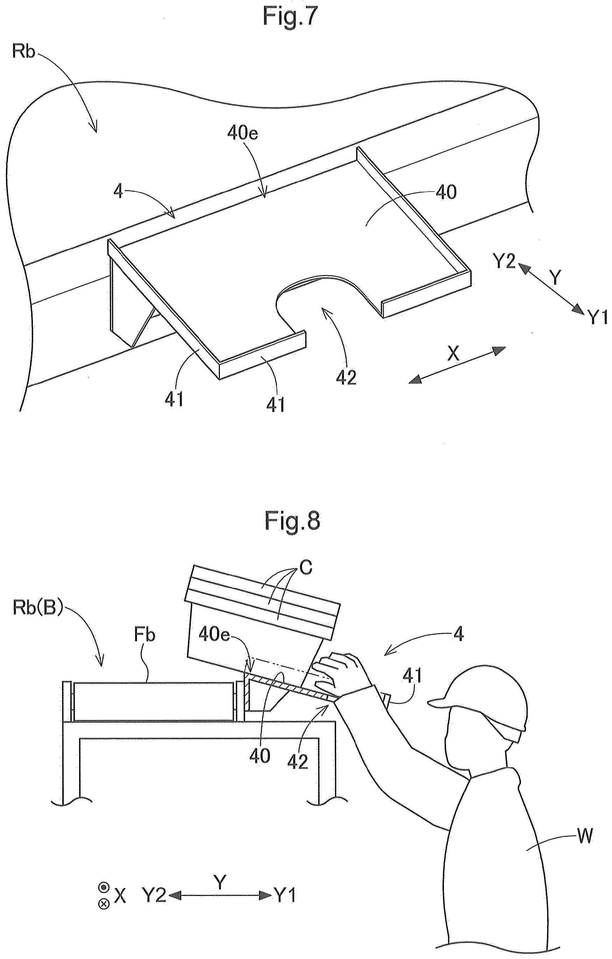

As illustrated in Fig. 7, in the present embodiment, the empty container storage unit 4 includes a cavity portion 42 formed in part of the container supporting surface 40. The cavity portion 42 is formed to extend toward the collection path Rb from an end portion of the container supporting surface 40 which end portion is opposite to the collection path Rb. In the present embodiment, the cavity portion 42 is a notch formed by cutting the end portion of the container supporting surface 40 which end portion is opposite to the collection path Rb.

The cavity portion 42 allows the operator W to easily put the empty container C onto the collection path Rb. That is, as illustrated in Fig. 8 in a case where the operator W pushes the empty container C stored in the empty container storage unit 4 toward the collection path Rb, the operator W can insert his or her hand into the cavity portion 42 and push the empty container C. With such a configuration, the operator W does not have to place his or her hand above the container supporting surface 40 to push the empty container C. Accordingly, the empty container C can be effectively pushed toward the collection path Rb. This configuration is highly advantageous for an operator who is relatively short.

Although details are not illustrated herein, a guide member configured to guide the empty container C thus pushed toward the collection path Rb may be provided between the collection path Rb and the empty container storage unit 4. For example, in a case where a distance between the adjacent portion 40e of the container supporting surface 40 and the transport surface Fb of the collection path Rb in the up-down direction is large, the guide member may be provided between the adjacent portion 40e and the transport surface Fb in up-down direction so as to facilitate smooth movement of the empty container C from the container supporting surface 40 to the transport surface Fb.

### [Other Embodiments]

Next will be described other embodiments of the article transport facility.
(1) The above embodiment has described an example in which the container C that can store the article G is placed on the temporary placing stand 1. However, the present invention is not limited to such an example. No container C may be placed on the temporary placing stand 1, and the article G supplied from the article supply unit Pg may be just put on the temporary placing stand 1. In this case, the temporary placing stand 1 may be provided with a stopper configured to restrict the article G from dropping from the temporary placing stand 1, or a recessed portion configured to prevent the article G put on the temporary placing stand 1 from rolling.
(2) The above embodiment has described an example in which each of the plurality of sorting conveyors Sc is arranged to transport the articles G or the container C along the path width direction Y. However, the present invention is not limited to such an example. The transport direction of the articles G or the container C to be transported by the plurality of sorting conveyors Sc can be determined appropriately to correspond to the operation or the like of the facility.
(3) The above embodiment has described an example in which the collection path Rb is constituted by one path including the first section Rb1 overlapping with the first sorting conveyor group Sc1 as viewed vertically, the second section Rb2 overlapping with the second sorting conveyor group Sc2 as viewed vertically, and the connection section Rbc connecting the first section Rb 1 and the second section Rb2. However, the present invention is not limited to such an example, and the collection path Rb may include a plurality of divided paths. Even in this case, the plurality of divided paths may extend to a position adjacent to the work area WA.
(4) The above embodiment has described an example in which the collection path Rb extends to the position adjacent to the work area WA. However, the present invention is not limited to such an example, and the collection path Rb may extend to the temporary placing stand 1, for example. Alternatively, the temporary placing stand 1 may be a terminal end portion of the collection path Rb in the transport direction. In this case, it is not necessary to move the empty container C transported on the collection path Rb to the temporary placing stand 1.
(5) The above embodiment has described an example in which the collection path Rb is located at a height different from the transport path Fr. However, the present invention is not limited to such an example, and the collection path Rb may be located at the same height as the transport path Fr.
(6) The above embodiment has described an example in which the collection path Rb is located at a position higher than the transport path Fr. However, the present invention is not limited to such an example, and the collection path Rb may be located at a position lower than the transport path Fr.
(7) The second embodiment has described an example in which the cavity portion 42 is a notch formed by cutting the end portion of the container supporting surface 40 which end portion is opposite to the collection path Rb. However, the present invention is not limited to such an example. For example, in a case where the empty container storage unit 4 is constituted by a pair of plate materials distanced from each other in the extending direction (the path direction X) of the collection path Rb, the cavity portion 42 may be a space between the pair of plate materials. Note that no cavity portion 42 may be provided for the container supporting surface 40.
(8) Note that the configurations disclosed in the above embodiments can be applied in combination with the configurations disclosed in other embodiments as long as no inconsistency occurs. In terms of other configurations, the embodiments disclosed in the present specification are also just examples in all respects. Accordingly, various modifications can be made appropriately as far as it does not deviate from the scope of this disclosure.

### [Overview of Embodiment]

The following describes the article transport facility described above.

The article transport facility includes: a transport vehicle configured to travel along a predetermined travel path and transport articles; an article supply unit configured to supply the articles to be transported by the transport vehicle; a transport path on which the transport vehicle travels to transport the articles in a path direction along the transport path; a work area adjacent to the transport path from a first side in a path width direction perpendicular to the path direction as viewed vertically and adjacent to the article supply unit from a first side in the path direction, the work area being an area in which the articles supplied from the article supply unit are transferred to the transport vehicle; and a temporary placing stand provided for a region adjacent to the work area from a second side in the path direction and sandwiched between the transport path and the article supply unit in the path width direction so that the articles supplied from the article supply unit are temporarily placed on the temporary placing stand, the second side in the path direction being opposite from the first side in the path direction.

With this configuration, in the work area, the articles supplied from the article supply unit can be transferred to the transport vehicle standing by on the transport path. In a case where no transport vehicle stands by on the transport path, the articles supplied from the article supply unit can be placed on the temporary placing stand. Accordingly, it is possible to prevent delays in the supply of the articles without stopping the operation of the article supply unit. In addition, in this configuration, since the article supply unit, the temporary placing stand, and the transport path are arranged in the path width direction, it is possible to smoothly move the articles from the article supply unit to the temporary placing stand and smoothly move the articles from the temporary placing stand to the transport vehicle on the transport path.

The article transport facility may further include at least one container placed on the temporary placing stand in such a manner that the articles are storable in the at least one container. The transport vehicle may be configured to transport the articles or the at least one container storing the articles.

With this configuration, it is possible to store a plurality of articles sequentially supplied from the article supply unit in the container. Then, at the timing when the articles can be transferred to the transport vehicle, the articles stored in the container can be transferred to the transport vehicle together with the container, or each of the articles can be taken out from the container and transferred to the transport vehicle.

The article transfer facility may further include a sorting area provided apart from the work area but adjacent to the transport path in the path width direction and used for sorting of the articles. The transport vehicle may receive the articles or the at least one container storing the articles in the work area and transport the articles or the at least one container storing the articles to the sorting area. The sorting operation may include taking out the articles from the at least one container transported by the transport vehicle. The article transfer facility may further include: an empty container collector configured to collect, as at least one empty container, the at least one container from which the articles are taken out; and a collection path extending to be adjacent to the work area to transport the at least one empty container by the empty container collector.

With this configuration, after the articles contained in the container are transported to the sorting area and sorted, the empty container collector can collect the empty container from which the articles are taken out. This allows the empty container thus collected to be transported to the work area along the collection path and to be used again for the operation in the work area.

The article transport facility may further include an empty container storage unit adjacent to the collection path and configured to store the at least one empty container to be put onto the collection path. The empty container storage unit may have a container supporting surface supporting the at least one empty container from below, the collection path may have a transport surface supporting, from below, the at least one empty container transported on the collection path, and the container supporting surface may include an adjacent portion adjacent to the transport surface and higher than the transport surface in height.

With this configuration, the empty container from which the articles are taken out can be temporarily stored in the empty container storage unit before the empty container is put onto the collection path. Accordingly, it is possible to put the empty container from which the articles are taken out can be put onto the collection path at a convenient timing. Since a plurality of empty containers can be stored in the empty container storage unit, it is possible to put the plurality of empty containers onto the collection path at a time, thereby making it possible to easily achieve a reduction in the number of operation steps. Besides, since the adjacent portion of the container supporting surface which adjacent portion is adjacent to the transport surface is higher than the transport surface in height, it is not necessary to lift the empty container at the time when the empty container is put onto the collection path, thereby making it possible to easily put the empty container onto the collection path.

The article transport facility may further include at least one empty container storage unit adjacent to the collection path and configured to store the at least one empty container to be put onto the collection path. The at least one empty container storage unit may have a container supporting surface supporting the at least one empty container from below, the at least one empty container storage unit may include a plurality of empty container storage units, and the plurality of empty container storage units may be placed at intervals along an extending direction of the collection path.

With this configuration, it is possible to store empty containers in a plurality of places along the extending direction of the collection path.

The article transport facility may further include a plurality of sorting conveyors disposed in the sorting area and configured to transport the articles or the at least one container received from the transport vehicle, the plurality of sorting conveyors being arranged along the path direction in such a manner that the plurality of sorting conveyors each transports the articles or the at least one container along the path width direction. The collection path may extend along a direction intersecting with a transport direction of the articles or the at least one container transported by the plurality of sorting conveyors and overlap with the plurality of sorting conveyors as viewed vertically.

With this configuration, in a case where a plurality of sorting conveyors configured to sort articles is disposed in the sorting area, empty containers caused by the sorting in the sorting conveyors can be collected effectively. Since the collection path overlaps with the sorting conveyors as viewed vertically, it is possible to effectively use a horizontal space.

The plurality of sorting conveyors may include a first sorting conveyor group and a second sorting conveyor group placed to sandwich the transport path in the sorting area. The first sorting conveyor group may include a plurality of sorting conveyors adjacent to the transport path from the first side in the path width direction. The second sorting conveyor group may include a plurality of sorting conveyors adjacent to the transport path from a second side in the path width direction which second side is opposite to the first side in the path width direction. The collection path may include: a first section extending along the path direction and overlapping with the first sorting conveyor group as viewed vertically; a second section extending along the path direction and overlapping with the second sorting conveyor group as viewed vertically; and a connection section connecting respective end portions of the first section and the second section which end portions are farthest from the work area.

This configuration allows one collection path to collect and transport, to the work area, respective empty containers caused by the sorting operation in the first sorting conveyor group and the second sorting conveyor group placed to sandwich the transport path.

The collection path may be located at a height different from the transport path.

With this configuration, it is possible to determine respective extending directions of the collection path and the transport path with a high degree of freedom.

The article transport facility may further include a notifier provided for the work area and configured to notify arrival of the at least one empty container transported on the collection path at the work area.

With this configuration, in a case where an operator performs the operation in the work area, the operator can easily grasp the arrival of a container at the work area.

### Industrial Applicability

The technology according to this disclosure is applicable to an article transport facility including a transport vehicle configured to travel along a predetermined travel path and transport articles, and an article supply unit configured to supply the articles to be transported by the transport vehicle.

### Description of Reference Numerals

100: article transport facility
V: transport vehicle
Fr: transport path
WA: work area
SA: sorting area
Sc: sorting conveyor
Sc1: first sorting conveyor group
Sc2: second sorting conveyor group
Pg: article supply unit
B: empty container collector
Rb: collection path
Fb: transport surface
Rb1: first section
Rb2: second section
Rbc: connection section
1: temporary placing stand
2: notifier
4: empty container storage unit
40: container supporting surface
40e: adjacent portion
G: article
C: container
X: path direction
X1: path-direction first side
X2: path-direction second side
Y: path width direction
Y1: path-width-direction first side
Y2: path-width-direction second side

## Claims

1. An article transport facility, comprising:
a transport vehicle configured to travel along a predetermined travel path and transport articles;
an article supply unit configured to supply the articles to be transported by the transport vehicle;
a transport path on which the transport vehicle travels to transport the articles in a path direction along the transport path;
a work area adjacent to the transport path from a first side in a path width direction perpendicular to the path direction as viewed vertically and adjacent to the article supply unit from a first side in the path direction, the work area being an area in which the articles supplied from the article supply unit are transferred to the transport vehicle; and
a temporary placing stand provided for a region adjacent to the work area from a second side in the path direction and sandwiched between the transport path and the article supply unit in the path width direction so that the articles supplied from the article supply unit are temporarily placed on the temporary placing stand, the second side in the path direction being opposite from the first side in the path direction.

2. The article transport facility according to claim 1, further comprising:
at least one container placed on the temporary placing stand in such a manner that the articles are storable in the at least one container, wherein
the transport vehicle is configured to transport the articles or the at least one container storing the articles.

3. The article transport facility according to claim 2, further comprising:
a sorting area provided apart from the work area but adjacent to the transport path in the path width direction and used for sorting of the articles,
the transport vehicle receives the articles or the at least one container storing the articles in the work area and transports the articles or the at least one container storing the articles to the sorting area,
the sorting includes taking out the articles from the at least one container transported by the transport vehicle, and
the article transport facility further comprises:
an empty container collector configured to collect, as at least one empty container, the at least one container from which the articles are taken out; and
a collection path extending to be adjacent to the work area to transport the at least one empty container by the empty container collector.

4. The article transport facility according to claim 3, further comprising:
an empty container storage unit adjacent to the collection path and configured to store the at least one empty container to be put onto the collection path, wherein
the empty container storage unit has a container supporting surface supporting the at least one empty container from below,
the collection path has a transport surface supporting, from below, the at least one empty container transported on the collection path, and
the container supporting surface includes an adjacent portion adjacent to the transport surface and higher than the transport surface in height.

5. The article transport facility according to claim 3, further comprising:
at least one empty container storage unit adjacent to the collection path and configured to store the at least one empty container to be put onto the collection path, wherein
the at least one empty container storage unit has a container supporting surface supporting the at least one empty container from below,
the at least one empty container storage unit includes a plurality of empty container storage units, and
the plurality of empty container storage units is placed at intervals along an extending direction of the collection path.

6. The article transport facility according to any one of claims 3 to 5, further comprising:
a plurality of sorting conveyors disposed in the sorting area and configured to transport the articles or the at least one container received from the transport vehicle, the plurality of sorting conveyors being arranged along the path direction in such a manner that the plurality of sorting conveyors each transports the articles or the at least one container along the path width direction, wherein
the collection path extends along a direction intersecting with a transport direction of the articles or the at least one container transported by the plurality of sorting conveyors and overlaps with the plurality of sorting conveyors as viewed vertically.

7. The article transport facility according to claim 6, wherein
the plurality of sorting conveyors includes a first sorting conveyor group and a second sorting conveyor group placed to sandwich the transport path in the sorting area,
the first sorting conveyor group includes a plurality of sorting conveyors adjacent to the transport path from the first side in the path width direction,
the second sorting conveyor group includes a plurality of sorting conveyors adjacent to the transport path from a second side in the path width direction which second side is opposite to the first side in the path width direction, and
the collection path includes:
a first section extending along the path direction and overlapping with the first sorting conveyor group as viewed vertically;
a second section extending along the path direction and overlapping with the second sorting conveyor group as viewed vertically; and
a connection section connecting respective end portions of the first section and the second section which end portions are farthest from the work area.

8. The article transport facility according to any one of claims 3 to 5, wherein the collection path is located at a height different from the transport path.

9. The article transport facility according to any one of claims 3 to 5, further comprising:
a notifier provided for the work area and configured to notify arrival of the at least one empty container transported on the collection path at the work area.
